# EUROPEAN PATENT SPECIFICATION

(11) **EP 3 636 515 B1**
(45) Date of publication and mention of the grant of the patent: **25.08.2021**
(21) Application number: 19201831.5
(22) Date of filing: 08.10.2019
(51) Int. Cl.: B62B 3/00, B62B 3/02

(54) **CARRIAGE FOR LOADING AND UNLOADING PIECES AND METHOD FOR LOADING PIECES ON A CARRIAGE**
WAGEN ZUM LADEN UND ENTLADEN VON STÜCKEN UND VERFAHREN ZUM LADEN VON STÜCKEN AUF EINEN WAGEN
CHARIOT DE CHARGEMENT ET DE DÉCHARGEMENT DE PIÈCES ET PROCÉDÉ DE CHARGEMENT DE PIÈCES SUR UN CHARIOT

(30) Priority: 09.10.2018 IT 201800009283; 19.10.2018 IT 201800009594
(43) Date of publication of application: 15.04.2020
(73) Proprietor: SCM Group S.p.A., 47921 Rimini (RN) (IT)
(72) Inventor: BIANCHI, Fabio, 47921 RIMINI (IT)
(74) Representative: Tiburzi, Andrea

(56) References cited:
- EP-A1- 2 628 653
- CN-Y- 201 201 622
- DE-A1- 19 817 658
- GB-A- 1 342 895
- US-A1- 2013 001 904

## Description

This invention relates to a carriage for loading and unloading pieces and method for loading pieces on a carriage.

In particular, the invention comprises a carriage for loading and unloading pieces with an oblong shape made of wood or other materials.

The description below relates to a carriage for loading and unloading pieces made of solid wood, but it is quite apparent how the same should not be considered limited to this specific use, as the relative field of application may also be extended to pieces of different type.

Various types of carriages are known for the loading and unloading of pieces which have, however, various drawbacks and disadvantages linked mainly to the poor ease of use and the arrangement when not in use.

Examples of known carriages and methods of using these carriages are disclosed in US 2013/001904 A1, CN 201201622 Y, GB 1342895 A, DE 19817658 A1 and EP 2628653 A1.

In light of the above, the aim of the invention is therefore to provide a carriage for loading and unloading pieces which is particularly convenient to use.

A further aim of the invention is to provide a carriage for loading and unloading pieces which is convenient to arrange in the relative recovery zones.

A further aim of the invention is to provide a carriage for loading and unloading pieces which has reduced overall dimensions.

Another aim of the invention is to provide a method for loading pieces on a carriage which allows the loading operations to be performed safely, avoiding the occurrence of accidents during performance of the operations.

According to the invention, solving these objects is achieved as defined in the independent claims 1 and 7.

The specific object of this invention is therefore a method for loading pieces on a carriage comprising: a frame equipped with a plurality of wheels for moving, in use, on a floor; and at least one first support surface connected to said frame and at least one second support surface which is placed above said at least one first support surface and connected with said frame in a movable way between an operative position, where said at least one second support surface is placed substantially horizontal such as to allow laying at least one piece on said at least one second support surface, and an inactive position, where said at least one second support surface is placed such as to keep free the upper part of said at least one first support surface to allow laying at least one piece on said at least one first support surface; said method comprising the steps of: positioning said at least one second support surface in said inactive position; loading at least one piece on said at least one first support surface; moving said at least one second support surface from said inactive position to said operative position; and loading at least one piece on said at least one second support surface positioned in said operative position.

Again according to the invention, said method can also comprise the steps of: unloading at least one piece from said at least one second support surface positioned in said operative position; moving said at least one second support surface from said operative position to said inactive position; and unloading at least one piece from said at least one first support surface.

Advantageously, according to the invention, said method can comprise the steps of providing first sensor means and detecting, by means of first said sensor means, whether on said at least one second support surface positioned in said operative position there is at least one piece.

Again according to the invention, said step for moving said at least one second support surface from said operative position to said inactive position can be performed if it has been previously detected that there is no piece on said at least one second support surface positioned in said operative position.

According to the invention, said method comprises a device for automatic loading, and at least one of said steps of: positioning said at least one second support surface in said inactive position; loading at least one piece on said at least one first support surface; moving said at least one second support surface from said inactive position to said operative position; loading at least one piece on said at least one second support surface positioned in said operative position; is performed by means of said automatic loading device.

Conveniently, according to the invention, said method can comprise the steps of providing second sensor means and detecting, by means of first second sensor means, whether said at least one second support surface is in said operative position.

Further, according to the invention, said step for loading at least one piece on said at least one second support surface can be performed if it has been previously detected that said at least one second support surface is in said operative position.

An object of the invention is also a carriage for loading and unloading pieces comprising: a frame equipped with a plurality of wheels for moving, in use, on a floor; and at least one first support surface connected to said frame and at least one second support surface which is placed above said at least one first support surface and connected with said frame in a movable way between an operative position, where said at least one second support surface is placed substantially horizontal such as to allow laying at least one piece on said at least one second support surface, and an inactive position, where said at least one second support surface is placed such as to keep free the upper part of said at least one first support surface to allow laying at least one piece on said at least one first support surface.

Conveniently, according to the invention, said at least one first support surface and said least one second support surface can each comprise a plurality of prongs which are substantially parallel to one another.

Further, according to the invention, said plurality of prongs can have a prong density which progressively increases from a first side of said plurality of prongs to a second side of said plurality of prongs which is opposite to said first side.

Advantageously, according to the invention, said at least one second support surface can be connected with said frame such as to be rotatable about a first rotation axis.

Preferably, according to the invention, said first rotation axis is substantially horizontal.

Conveniently, according to the invention, said at least one second support surface, in said inactive position, can be positioned substantially vertically.

Further, according to the invention, said carriage can comprise at least one third support surface which is placed above said at least one second support surface and rotatably connected with said frame about a second rotation axis, which is parallel to and horizontally staggered relative to said first rotation axis, between an operative position, where said at least one third support surface is placed substantially horizontal such as to allow laying at least one piece on said at least one third support surface, and an inactive position, where said at least one third support surface is placed such as to keep free the upper part of said at least one second support surface which is placed in the respective operative position, to allow laying at least one piece on said at least one second support surface.

Alternatively, according to the invention, said at least one second support surface can be connected with said frame such as to be able to translate.

Preferably, according to the invention, said at least one second support surface is connected with said frame such as to be able to translate along a translation axis which is substantially horizontal.

Again according to the invention, at least one first side and at least one second side which is longer than said at least one first side can be defined in said at least one second support surface, and said translation axis can be substantially parallel to said at least one first side.

Further, according to the invention, said carriage can comprise at least one third support surface which is placed above said at least one second support surface and connected with said frame in such a way as that it can be translated between an operative position, where said at least one third support surface is placed substantially horizontal such as to allow laying at least one piece on said at least one third support surface, and an inactive position, where said at least one third support surface is placed such as to keep free the upper part of said at least one second support surface which is placed in the respective operative position, to allow laying at least one piece on said at least one second support surface.

Preferably, according to the invention, at least one wheel of said plurality of wheels is associated with a stopping system to allow stopping said carriage.

Advantageously, according to the invention, said carriage can comprise first sensor means configured to detect whether on said at least one second support surface there is at least one piece.

Conveniently, according to the invention, said carriage can comprise second sensor means configured to detect whether said at least one second support surface is in said operative position.

The invention is now described, by way of example and without limiting the scope of the invention, according to its preferred embodiments, with particular reference to the accompanying drawings, in which:
Figure 1 is an axonometric view of a carriage for loading and unloading pierces according to a first embodiment, in a first operating step;
Figure 2 is an axonometric view of a carriage for loading and unloading pierces shown in Figure 1, in a second operating step;
Figure 3 is a side view of the carriage of Figure 1;
Figure 4 is a side view of the carriage of Figure 1, in a further operating step;
Figure 5 is an axonometric view of a carriage for loading and unloading pierces according to the invention, in cooperation with a motor-driven mechanical arm;
Figure 6 is a side view of that shown in Figure 5;
Figure 7 is a side view of three carriages for loading and unloading pierces according to the invention, in the relative inactive configuration, that is, in the configuration which they can adopt when they are not used; and
Figure 8 is a side view of a carriage for loading and unloading pierces according to a second embodiment of the invention.

The similar parts will be indicated in the various drawings with the same numerical references.

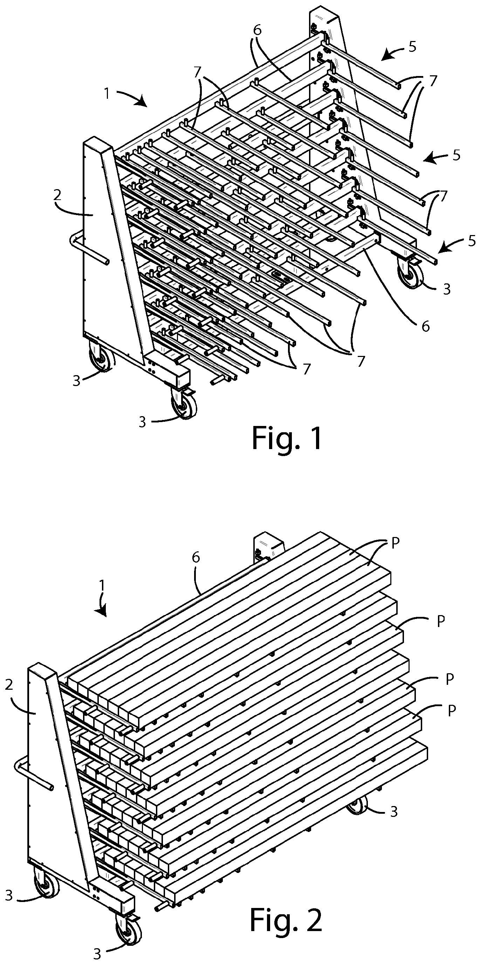

With reference to Figures 1 to 7, the numeral 1 indicates a carriage for loading and unloading pieces according to the invention.

The carriage 1 comprises a frame 2 under which there are four wheels 3 for the relative movement on the floor on which it is placed.

One or more of the above-mentioned wheels 3 can comprise a locking system for stopping the carriage 1.

The frame 2 comprises a first lateral upright 4a and a second lateral upright 4b both having a substantially L-shaped profile.

Between the first lateral upright 4a and the second lateral upright 4b there is a plurality movable support surfaces 5.

Each support surface 5 is formed by a transversal bar 6 mounted in a rotatable fashion around the relative axis between the first 4a and the second lateral upright 4b, and by a plurality of prongs 7, that is, rigid elements with an oblong shape each extending from said transversal bar 6 perpendicularly to it.

More in detail, said prongs 7 are fixed to the respective transversal bar 6 in such a way that their density progressively increases from one end to the other of the same transversal bar 6 (see for example Figure 1), to allow the resting of the shorter pieces on the portion of the supporting surfaces 5 in which there is a greater density of prongs 7.

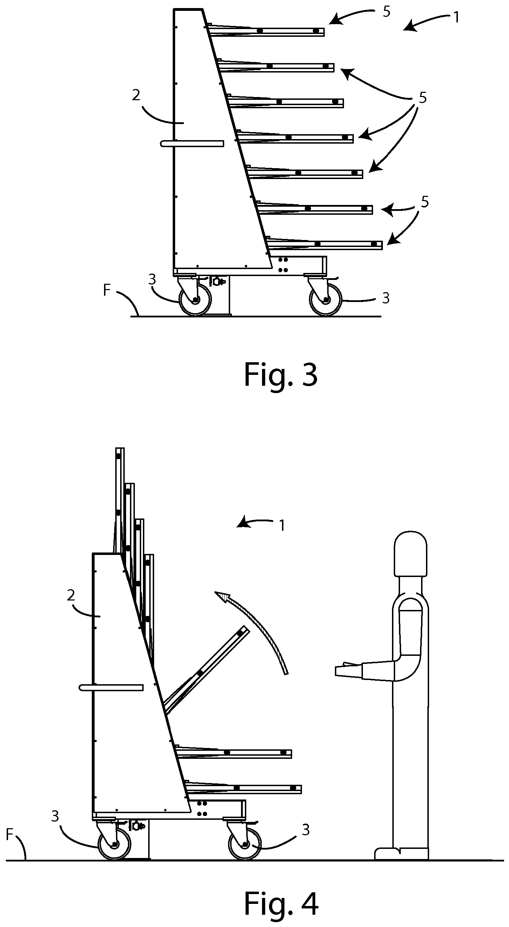

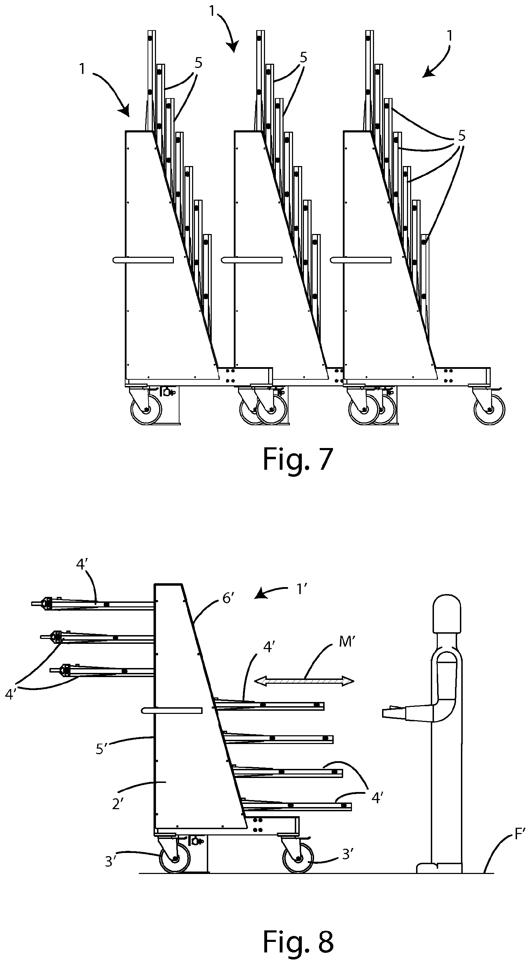

For this reason, each support surface 5 is rotatable about the relative rotation axis between an operative position, in which the support surface 5 will be placed horizontally, that is, parallel the floor F to allow the support of the pieces P (see Figures 1, 2 and 3) and an inactive position, in which the same support surface 5 will be placed vertically, that is, perpendicular to the floor F to facilitate the arrangement of the carriage 1 when not in use (see Figures 4 and 7).

In particular, the above-mentioned transversal bars 6 are mounted on the first lateral upright 4a and on the second lateral upright 4b one above the other offset horizontally, to allow the transversal bars 6 to be positioned vertically one adjacent to the other when the carriage 1 is not in use (see Figures 4 and 7).

Moreover, in consideration of the fact that in this particular embodiment the prongs 7 substantially have the same length, each support surface 5 protrudes, horizontally, by a predetermined portion with respect to that directly overlying it when, obviously, the same support surfaces 5 are placed in the respective lowered operative positions (see Figure 3).

In accordance with further embodiments of the invention, the prongs 7 can also have different lengths, and also different shapes with respect to the straight one shown in the accompanying drawings.

Even though the support surfaces 5 provided in the carriage 1 described above and shown in Figures 1 to 7 can be moved manually, the same carriage 1 could also comprise actuator devices or elements for automatically moving the above-mentioned support surfaces 5.

Before starting the loading operations of the carriage 1 described above, the support surfaces 5 are all placed in the relative raised inactive position (see Figure 7).

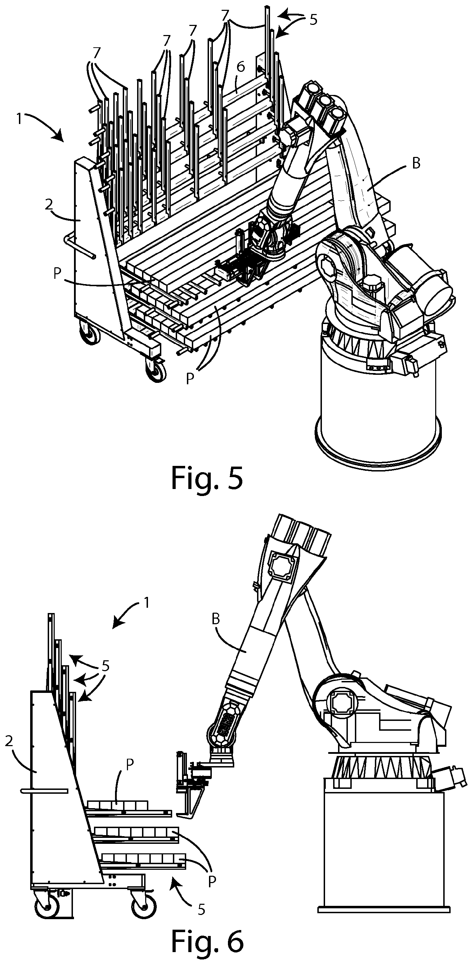

Subsequently, after having rotated downwards the first support surface 5, that is to say, the lowest one, to the relative lowered operative position, it is loaded, either manually or by means of, for example, a motor-driven mechanical arm B (see Figures 5 and 6), with a predetermined number of pieces P positioning them parallel to each other and adjacent to each other.

After having completed the loading of the first support surface 5, the second support surface 5 is lowered, in the respective lowered operative position, directly over the above-mentioned first support surface 5 and it is also loaded with a predetermined number of pieces P in the same way as described above.

The support surfaces 5 are lowered, individually, in the respective operative position in succession from the bottom upwards and loaded, one at a time, with the various pieces P according to the methods described above.

In order to unload from the carriage 1 the pieces P loaded in this way, the activities are carried out in reverse, that is to say, unloading, for example manually or by means of said motor-driven mechanical arm B, the pieces P from the top support surface 5 and then rotating the latter upwards and proceeding in this way from the top downwards until the last support surface 5 placed at the bottom of the carriage 1.

In this way, the loading and unloading operations on the carriage 1 can be performed more easily and conveniently with respect to the traditional carriages, as each support surface 5 can be loaded and unloaded without having any obstacle above it.

Moreover, the carriages 1 of this type, when arranged with the relative support surfaces 5 in the raised position, can also be placed in narrow spaces thanks to their reduced overall horizontal dimensions (see Figure 7).

In the carriage 1, preferably in the relative support surfaces 5, and/or in the motor-driven mechanical arm B there can be sensors (not shown in the drawings) for detecting any presence of pieces P on each support surface 5 and/or sensors (not show in the drawings) for detecting whether each support surface 5 is in the relative lowered or raised position.

The above-mentioned sensors can be of the optical type (video camera, infrared sensors, etc.) or mechanical type (for example, a mechanical or cam-type contact unit) or electronic type (for example, an encoder which measures the rotation of the support surface) or acoustic type (for example, an ultrasound sensor).

The above-mentioned sensors for detecting the presence of pieces P on the support surfaces 5 of the carriage 1 allow, in particular, for the movement of each support surface 5 from the relative lowered position to the raised position only after having unloaded all the pieces P from that support surface 5.

On the other hand, the above-mentioned sensors for detecting the position of the support surfaces 5 prevent the occurrence of collisions between the motor-driven mechanical arm B, or robot, and the pieces P and/or the support surfaces 5.

With specific reference to Figure 8, the numeral 1' indicates a second carriage for loading and unloading pieces according to the invention.

The second carriage 1' has a frame 2', substantially equal to the frame 2 described above, with a plurality of wheels 3' on the respective base.

One or more wheels of the plurality of wheels 3 can comprise a locking system for stopping the second carriage 1'.

This second carriage 1' also comprises a plurality of movable support surfaces 4', having the same shape as the support surfaces 5 of the above-mentioned carriage 1.

In this case, however, the support surfaces 4' are not enabled to rotate, but to translate, by means of a series of guide systems (not illustrated) formed in the frame 2', on a respective surface parallel to the floor F' along an axis of movement M' directed according to the depth of the second carriage 1', that is, parallel to each short side of the support surface 4'.

In particular, each support surface 4' can be translated between a respective inactive position, in which it protrudes from the rear 5' of the frame 2', and a respective operative position, in which i protrudes, on the other hand, from the front part 6' of the latter.

Even though the support surfaces 4' provided in the second carriage 1' described above and shown in Figure 8 can be moved manually, the same second carriage 1' could also comprise actuator devices or elements for automatically moving the above-mentioned support surfaces 4'.

In a similar way to the operation of the carriage 1 described above, the loading of the pieces on the second carriage 1' occurs by starting from the support surface 4' positioned lowest and continuing to load, in sequence, on the support surfaces 4' above.

In order to unload from the second carriage 1' the pieces P loaded in this way, the activities are carried out in reverse, that is to say, unloading, for example manually or by means of said motor-driven mechanical arm B, the pieces from the top support surface 4' and then moving in the relative inactive position and proceeding in this same way from the top downwards until the last support surface 4' placed at the bottom of the second carriage 1'.

For this reason, also in this case the loading, and the unloading, of each support surface 4' can be performed without having any obstacle above the support surface 4' on which the pieces are being loaded, of from which the pieces are being unloaded.

Also in the carriage 1', preferably in the relative support surfaces 4', and/or in the motor-driven mechanical arm B there can be sensors (not shown in the drawings) for detecting any presence of pieces on each support surface 4' and/or sensors (not show in the drawings) for detecting whether each support surface 4' is in the relative operative or inactive position.

The above-mentioned sensors can be of the optical type (video camera, infrared sensors, etc.) or mechanical type (for example, a mechanical or cam-type contact unit) or electronic type (for example, an encoder which measures the rotation of the support surface) or acoustic type (for example, an ultrasound sensor).

The above-mentioned sensors for detecting the presence of pieces P on the support surfaces 4' of the second carriage 1' allow, in particular, for the movement of each support surface 4' from the relative operative position to the inactive position only after having unloaded all the pieces P from that support surface 4'.

On the other hand, the above-mentioned sensors for detecting the position of the support surfaces 4' prevent the occurrence of collisions between the motor-driven mechanical arm B, or robot, and the support surfaces 4' and/or the pieces placed on the latter.

According to the embodiments described above there is a manual movement of the support surfaces between the respective operative and inactive position; however, the carriage according to the invention can also comprise a motor-driven movement system to allow the movement of the individual support surfaces.

The movement of the support surfaces 5, 4' of the carriages 1, 1' described above between the respective operative and inactive positions, and vice versa, can also be performed by means of the above-mentioned motor-driven mechanical arm B or a different movement device outside the carriage.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Method for loading pieces (P) on a carriage (1, 1') comprising:
- a frame (2, 2') which is provided with a plurality of wheels (3, 3') to move, when in use, on a floor (F, F');
- at least one first support surface (5, 4') which is connected with said frame (2, 2');
- at least one second support surface (5, 4') which is placed above said at least one first support surface (5, 4') and connected with said frame (2, 2') in a movable way between an operative position, where said at least one second support surface (5, 4') is placed substantially horizontal such as to allow laying at least one piece (P) on said at least one second support surface (5, 4'), and an inactive position, where said at least one second support surface (5, 4') is placed such as to keep free the upper part of said at least one first support surface (5, 4') to allow laying at least one piece (P) on said at least one first support surface (5, 4'); and
- an automatic loading device;
said method comprising the following steps:
- positioning said at least one second support surface (5, 4') in said inactive position;
- loading at least one piece (P) on said at least one first support surface (5, 4');
- moving said at least one second support surface (5, 4') from said inactive position to said operative position; and
- loading at least one piece (P) on said at least one second support surface (5, 4') positioned in said operative position;
wherein at least one of said steps of:
- positioning said at least one second support surface (5, 4') in said inactive position;
- loading at least one piece (P) on said at least one first support surface (5, 4');
- moving said at least one second support surface (5, 4') from said inactive position to said operative position;
- loading at least one piece (P) on said at least one second support surface (5, 4') positioned in said operative position;
is performed by means of said automatic loading device.

2. Method according to claim 1, **characterised in that** it also comprises the steps of:
- unloading at least one piece (P) from said at least one second support surface (5, 4') positioned in said operative position;
- moving said at least one second support surface (5, 4') from said operative position to said inactive position; and
- unloading at least one piece (P) from said at least one first support surface (5, 4').

3. Method according to claim 1 or 2, **characterised in that** it comprises the steps of providing first sensor means and detecting, by means of said first sensor means, whether on said at least one second support surface (5, 4') positioned in said operative position there is at least one piece (P).

4. Method according to claim 2 or to claims 3 plus 2, **characterised in that** step for moving said at least one second support surface (5, 4') from said operative position to said inactive position is performed if it has been previously detected that there is no piece (P) on said at least one second support surface (5, 4') positioned in said operative position.

5. Method according to any one of the preceding claims, **characterised in that** it comprises the steps of providing second sensor means and detecting, by means of said second sensor means, whether said at least one second support surface (5, 4') is in said operative position.

6. Method according to claim 5, **characterised in that** said step for loading at least one piece (P) on said at least one second support surface (5, 4') is performed if it has been previously detected that said at least one second support surface (5, 4') is in said operative position.

7. System comprising:
a carriage (1, 1') for loading and unloading pieces (P) comprising:
- a frame (2, 2') which is provided with a plurality of wheels (3, 3') to move, when in use, on a floor (F, F');
- at least one first support surface (5, 4') which is connected with said frame (2, 2'); and
- at least one second support surface (5, 4') which is placed above said at least one first support surface (5, 4') and connected with said frame (2, 2') in a movable way between an operative position, where said at least one second support surface (5, 4') is placed substantially horizontal such as to allow laying at least one piece (P) on said at least one second support surface (5, 4'), and an inactive position, where said at least one second support surface (5, 4') is placed such as to keep free the upper part of said at least one first support surface (5, 4') to allow laying at least one piece (P) on said at least one first support surface (5, 4');
an automatic loading device for performing at least one of the steps of:
- positioning said at least one second support surface (5, 4') in said inactive position;
- loading at least one piece (P) on said at least one first support surface (5, 4');
- moving said at least one second support surface (5, 4') from said inactive position to said operative position;
- loading at least one piece (P) on said at least one second support surface (5, 4') positioned in said operative position.

8. System according to claim 7, **characterised in that** said at least one first support surface (5, 4') and said least one second support surface (5, 4') each comprise a plurality of prongs (7) which are substantially parallel to one another.

9. System according to claim 8, **characterised in that** said plurality of prongs (7) has a prong density which progressively increases from a first side of said plurality of prongs (7) to a second side of said plurality of prongs (7) which is opposite to said first side.

10. System according to any one of claims 7 to 9, **characterised in that** said at least one second support surface (5) is rotatably connected with said frame (2) about a first rotation axis.

11. System according to claim 10, **characterised in that** said first rotation axis is substantially horizontal.

12. System according to claim 10 or 11, **characterised in that** said at least one second support surface (5) in said inactive position is placed substantially vertical.

13. System according to any one of claims 10 to 12, **characterised in that** the carriage (1) comprises at least one third support surface (5) which is placed above said at least one second support surface (5) and rotatably connected with said frame (2) about a second rotation axis, which is parallel to and horizontally staggered relative to said first rotation axis, between an operative position, where said at least one third support surface (5) is placed substantially horizontal such as to allow laying at least one piece (P) on said at least one third support surface (5), and an inactive position, where said at least one third support surface (5) is placed such as to keep free the upper part of said at least one second support surface (5, 4') which is placed in the respective operative position, to allow laying at least one piece (P) on said at least one second support surface (5).

14. System according to any one of claims 7 to 9, **characterised in that** said at least one second support surface (5) is connected with said frame (2) such as to be able to translate.

15. System according to claim 14, **characterised in that** said at least one second support surface (5) is connected with said frame (2) such as to be able to translate along a translation axis (M') which is substantially horizontal.

16. System according to claim 15, **characterised in that** at least one first side and at least one second side which is longer than said at least one first side are defined in said at least one second support surface (5), and **in that** said translation axis (M') is substantially parallel to said at least one first side.

17. System according to any one of claims 14 to 16, **characterised in that** the carriage (1') comprises at least one third support surface (4') which is placed above said at least one second support surface (4') and connected with said frame (2') such as to be able to translate between an operative position, where said at least one third support surface (4') is placed substantially horizontal such as to allow laying at least one piece (P) on said at least one third support surface (4'), and an inactive position, where said at least one third support surface (4') is placed such as to keep free the upper part of said at least one second support surface (4') which is placed in the respective operative position, to allow laying at least one piece (P) on said at least one second support surface (4').

18. System according to any one of claims 7 to 17, **characterised in that** at least one wheel of said plurality of wheels (3, 3') is associated with a stopping system to allow stopping said carriage (1, 1').

19. System according to any one of claims 7 to 18, **characterised in that** the carriage (1, 1') comprises first sensor means configured to detect whether on said at least one second support surface (5, 4') there is at least one piece (P).

20. System according to any one of claims 7 to 19, **characterised in that** the carriage (1, 1') comprises second sensor means configured to detect whether said at least one second support surface (5, 4') is in said operative position.

## Patentansprüche

1. Verfahren zum Laden von Teilen (P) auf einen Wagen (1, 1'), umfassend:
- einen Rahmen (2, 2'), der mit einer Vielzahl von Rädern (3, 3') versehen ist, um sich, im Gebrauch, auf einem Boden (F, F') zu bewegen;
- zumindest eine erste Auflagefläche (5, 4'), die mit dem Rahmen (2, 2') verbunden ist;
- zumindest einen zweiten Auflagefläche (5, 4'), die auf der zumindest einen ersten Auflagefläche (5, 4') angeordnet und mit dem Rahmen (2, 2') derart verbunden ist, dass sie beweglich ist zwischen einer Arbeitsstellung, in der die zumindest einen zweiten Auflagefläche (5, 4') im Wesentlichen horizontal angeordnet ist, um das Auflegen von zumindest einem Teil (P) auf der zumindest einen zweiten Auflagefläche (5, 4') zu ermöglichen, und einer inaktiven Stellung, in der die zumindest einen zweiten Auflagefläche (5, 4') so angeordnet wird, dass der obere Teil der zumindest einen ersten Auflagefläche (5, 4') das Auflegen von zumindest einem Teil (P) auf der zumindest einen ersten Auflagefläche (5, 4') ermöglicht; und
- eine automatische Ladevorrichtung;
wobei das Verfahren die folgenden Schritte beinhaltet:
- Positionieren der zumindest einen zweiten Auflagefläche (5, 4') in der inaktiven Stellung;
- Laden von zumindest einem Teil (P) auf die zumindest eine erste Auflagefläche (5, 4');
- Bewegen der zumindest einen zweiten Auflagefläche (5, 4') aus der inaktiven Stellung in die Arbeitsstellung; und
- Laden von zumindest einem Teil (P) auf die zumindest eine in der Arbeitsstellung positionierte zweite Auflagefläche (5, 4');
wobei zumindest einer der Schritte zum:
- Positionieren der zumindest einen zweiten Auflagefläche (5, 4') in der inaktiven Stellung;
- Laden von zumindest einem Teil (P) auf die zumindest eine erste Auflagefläche (5, 4');
- Bewegen der zumindest einen zweiten Auflagefläche (5, 4') aus der inaktiven Stellung in die Arbeitsstellung;
- Laden von zumindest einem Teil (P) auf die zumindest eine in der Arbeitsstellung positionierte zweite Auflagefläche (5, 4');
mittels der automatischen Ladevorrichtung ausgeführt wird.

2. Verfahren nach Anspruch 1, **dadurch gekennzeichnet, dass** es auch folgende Schritte beinhaltet:
- Entladen von zumindest einem Teil (P) von der in der Arbeitsstellung positionierten zumindest einen zweiten Auflagefläche (5, 4');
- Bewegen der zumindest einen zweiten Auflagefläche (5, 4') aus der Arbeitsstellung in die inaktive Stellung; und
- Entladen von zumindest einem Teil (P) von der zumindest einen ersten Auflagefläche (5, 4').

3. Verfahren nach Anspruch 1 oder 2, **dadurch gekennzeichnet, dass** es die Schritte des Bereitstellens erster Fühlermittel und des Erfassens, mit genannten ersten Fühlermitteln, ob sich auf der in der Arbeitsstellung positionierten zumindest einen zweiten Auflagefläche (5, 4') zumindest ein Teil (P) befindet, umfasst.

4. Verfahren nach Anspruch 2 oder nach den Ansprüchen 3 und 2, **dadurch gekennzeichnet, dass** der Schritt zum
Bewegen der zumindest einen zweiten Auflagefläche (5, 4') aus der Arbeitsstellung in die inaktive Stellung ausgeführt wird, wenn zuvor erfasst wurde, dass sich kein Teil (P) auf der in der Arbeitsstellung positionierten zumindest einen zweiten Auflagefläche (5, 4') befindet.

5. Verfahren nach einem der vorhergehenden Ansprüche, **dadurch gekennzeichnet, dass** es die Schritte des Bereitstellens zweiter Fühlermittel und des Erfassens, mit genannten zweiten Fühlermitteln, ob sich die zumindest eine zweite Auflagefläche (5, 4') in der Arbeitsstellung befindet, umfasst.

6. Verfahren nach Anspruch 5, **dadurch gekennzeichnet, dass** der Schritt zum Laden von zumindest einem Teil (P) auf die zumindest eine zweite Auflagefläche (5, 4') ausgeführt wird, wenn zuvor erfasst wurde, dass sich die zumindest eine zweite Auflagefläche (5, 4') in der Arbeitsstellung berfindet.

7. System, umfassend:
einen Wagen (1, 1') zum Laden und Entladen von Teilen (P), umfassend:
- einen Rahmen (2, 2'), der mit einer Vielzahl von Rädern (3, 3') versehen ist, um sich, im Gebrauch, auf einem Boden (F, F') zu bewegen;
- zumindest eine erste Auflagefläche (5, 4'), die mit dem Rahmen (2, 2') verbunden ist; und
- zumindest eine zweite Auflagefläche (5, 4'), die auf der zumindest einen ersten Auflagefläche (5, 4') angeordnet und mit dem Rahmen (2, 2') derart verbunden ist, dass sie beweglich ist zwischen einer Arbeitsstellung, in der die zumindest eine zweite Auflagefläche (5, 4') im Wesentlichen horizontal angeordnet ist, um das Auflegen von zumindest einem Teil (P) auf der zumindest einen zweiten Auflagefläche (5, 4') zu ermöglichen, und einer inaktiven Stellung, in der die zumindest eine zweite Auflagefläche (5, 4') so angeordnet wird, dass der obere Teil der zumindest einen ersten Auflagefläche (5, 4') das Auflegen von zumindest einem Teil (P) auf der zumindest einen ersten Auflagefläche (5, 4') ermöglicht;
eine automatische Ladevorrichtung zum Ausführen von zumindest einem der Schritte zum:
- Positionieren der zumindest einen zweiten Auflagefläche (5, 4') in der inaktiven Stellung;
- Laden von zumindest einem Teil (P) auf die zumindest eine erste Auflagefläche (5, 4');
- Bewegen der zumindest einen zweiten Auflagefläche (5, 4') aus der inaktiven Stellung in die Arbeitsstellung;
- Laden von zumindest einem Teil (P) auf die zumindest eine in der Arbeitsstellung positionierte zweite Auflagefläche (5, 4').

8. System nach Anspruch 7, **dadurch gekennzeichnet, dass** die zumindest eine erste Auflagefläche (5, 4') und die zumindest eine zweite Auflagefläche (5, 4') jeweils eine Vielzahl von Zinken (7) umfassen, die im Wesentlichen parallel zueinander sind.

9. System nach Anspruch 8, **dadurch gekennzeichnet, dass** die Vielzahl von Zinken (7) eine Zinkendichte aufweist, die fortschreitend von einer ersten Seite der Vielzahl von Zinken (7) ausgehend zu einer der ersten Seite gegenüberliegenden zweiten Seite der Vielzahl von Zinken (7) hin zunimmt.

10. System nach einem der Ansprüche von 7 bis 9, **dadurch gekennzeichnet, dass** die zumindest eine zweite Auflagefläche (5) um eine erste Drehachse drehbar mit den Rahmen (2) verbunden ist.

11. System nach Anspruch 10, **dadurch gekennzeichnet, dass** die erste Drehachse im Wesentlichen horizontal ist.

12. System nach Anspruch 10 oder 11, **dadurch gekennzeichnet, dass** die zumindest eine zweite Auflagefläche (5) in der inaktiven Stellung im Wesentlichen vertikal angeordnet ist.

13. System nach einem der Ansprüche von 10 bis 12, **dadurch gekennzeichnet, dass** der Wagen (1) zumindest eine dritte Auflagefläche (5) umfasst, die über der zumindest einen zweiten Auflagefläche (5) angeordnet ist und um eine zweite Drehachse, die parallel zu und horizontal gegenüber der ersten Drehachse versetzt ist, drehbar mit dem Rahmen (2) verbunden ist, um beweglich zu sein zwischen einer Arbeitsstellung, in der die zumindest eine dritte Auflagefläche (5) im Wesentlichen horizontal angeordnet ist, um das Auflegen von zumindest einem Teil (P) auf die zumindest eine dritte Auflagefläche (5) zu ermöglichen, und einer inaktiven Stellung, in der die zumindest eine dritte Auflagefläche (5) angeordnet ist, um den oberen Teil der zumindest einen zweiten Auflagefläche (5, 4'), die in der entsprechenden Arbeitsstellung angeordnet ist, frei zu halten, um das Auflegen von zumindest einem Teil (P) auf die zumindest eine zweite Auflagefläche (5) zu ermöglichen.

14. System nach einem der Ansprüche von 7 bis 9, **dadurch gekennzeichnet, dass** die zumindest eine zweite Auflagefläche (5) mit dem Rahmen (2) verbunden ist, um verschiebbar zu sein.

15. System nach Anspruch 14, **dadurch gekennzeichnet, dass** die zumindest eine zweite Auflagefläche (5) mit dem Rahmen (2) verbunden ist, um entlang einer im Wesentlichen horizontalen Translationsachse (M') verschiebbar zu sein.

16. System nach Anspruch 15, **dadurch gekennzeichnet, dass** zumindest eine erste Seite und zumindest eine zweite Seite, die länger ist als die zumindest eine erste Seite, in der zumindest einen zweiten Auflagefläche (5) definiert sind, und dadurch, dass die Translationsachse (M') im Wesentlichen parallel zu der zumindest einen ersten Seite ist.

17. System nach einem der Ansprüche von 14 bis 16, **dadurch gekennzeichnet, dass** der Wagen (1') zumindest eine dritte Auflagefläche (4') umfasst, die über der zumindest einen zweiten Auflagefläche (4') angeordnet ist und mit dem Rahmen (2') verbunden ist, um verschiebbar zu sein zwischen einer Arbeitsstellung, in der die zumindest eine dritte Auflagefläche (4') im Wesentlichen horizontal angeordnet ist, um das Auflegen von zumindest einem Teil (P) auf die zumindest eine dritte Auflagefläche (4') zu ermöglichen, und einer inaktiven Stellung, in der die zumindest eine dritte Auflagefläche (4') angeordnet ist, um den oberen Teil der zumindest einen zweiten Auflagefläche (4'), die in der entsprechenden Arbeitsstellung angeordnet ist, frei zu halten, um das Auflegen von zumindest einem Teil (P) auf die zumindest eine zweite Auflagefläche (4') zu ermöglichen.

18. System nach einem der Ansprüche von 7 bis 17, **dadurch gekennzeichnet, dass** das zumindest eine Rad der Vielzahl von Rädern (3, 3') mit einem Stoppsystem verbunden ist, um das Anhalten des Wagens (1, 1') zu ermöglichen.

19. System nach einem der Ansprüche von 7 bis 18, **dadurch gekennzeichnet, dass** der Wagen (1, 1') erste Fühlermittel umfasst, die dafür konfiguriert sind, zu erfassen, ob sich auf der zumindest einen zweiten Auflagefläche (5, 4') zumindest ein Teil (P) befindet.

20. System nach einem der Ansprüche von 7 bis 19, **dadurch gekennzeichnet, dass** der Wagen (1, 1') zweite Fühlermittel umfasst, um zu erfassen, ob sich die zumindest eine zweite Auflagefläche (5, 4') in der Arbeitsstellung befindet.

## Revendications

1. Un procédé de chargement de pièces (P) sur un chariot (1, 1') comprenant :
- un châssis (2, 2') qui est muni d'une pluralité de roues (3, 3') pour se déplacer, lors de l'utilisation, sur un sol (F, F') ;
- au moins une première surface de support (5, 4') qui est reliée audit châssis (2, 2') ;
- au moins une deuxième surface de support (5, 4') qui est placée au-dessus de ladite au moins une première surface de support (5, 4') et reliée audit châssis (2, 2') de façon mobile entre une position opérationnelle, dans laquelle ladite au moins une deuxième surface de support (5, 4') est placée essentiellement horizontale de manière à permettre la mise en place d'au moins une pièce (P) sur ladite au moins une deuxième surface de support (5, 4'), et une position de repos, dans laquelle ladite au moins une deuxième surface de support (5, 4') est placée de manière à laisser libre la partie supérieure de ladite au moins une première surface de support (5, 4') pour permettre la mise en place d'au moins une pièce (P) sur ladite au moins une première surface de support (5, 4') ; et
- un dispositif de chargement automatique ;
ledit procédé comprenant les étapes suivantes :
- positionner ladite au moins une deuxième surface de support (5, 4') dans ladite position de repos ;
- charger au moins une pièce (P) sur ladite au moins une première surface de support (5, 4') ;
- déplacer ladite au moins une deuxième surface de support (5, 4') de ladite position de repos à ladite position opérationnelle ; et
- charger au moins une pièce (P) sur ladite au moins une deuxième surface de support (5, 4') positionnée dans ladite position opérationnelle ;
dans lequel au moins une desdites étapes consistant à :
- positionner ladite au moins une deuxième surface de support (5, 4') dans ladite position de repos ;
- charger au moins une pièce (P) sur ladite au moins une première surface de support (5, 4') ;
- déplacer ladite au moins une deuxième surface de support (5, 4') de ladite position de repos à ladite position opérationnelle ;
- charger au moins une pièce (P) sur ladite au moins une deuxième surface de support (5, 4') positionnée dans ladite position opérationnelle ;
est effectuée au moyen dudit dispositif de chargement automatique.

2. Le procédé selon la revendication 1, **caractérisé en ce qu'**il comprend également les étapes consistant à :
- décharger au moins une pièce (P) de ladite au moins une deuxième surface de support (5, 4') positionnée dans ladite position opérationnelle ;
- déplacer ladite au moins une deuxième surface de support (5, 4') de ladite position opérationnelle à ladite position de repos ; et
- décharger au moins une pièce (P) de ladite au moins une première surface de support (5, 4').

3. Le procédé selon la revendication 1 ou 2, **caractérisé en ce qu'**il comprend les étapes consistant à prévoir des premiers moyens capteurs et à détecter, via lesdits premiers moyens capteurs, s'il y a au moins une pièce (P) sur ladite au moins une deuxième surface de support (5, 4') positionnée dans ladite position opérationnelle.

4. Le procédé selon la revendication 2 ou les revendications 3 plus 2, **caractérisé en ce que** l'étape consistant à
déplacer ladite au moins une deuxième surface de support (5, 4') de ladite position opérationnelle à ladite position de repos est effectuée s'il a été préalablement détecté qu'il n'y a aucune pièce (P) sur ladite au moins une deuxième surface de support (5, 4') positionnée dans ladite position opérationnelle.

5. Le procédé selon l'une quelconque des revendications précédentes, **caractérisé en ce qu'**il comprend les étapes consistant à prévoir des deuxièmes moyens capteurs et à détecter, via lesdits deuxièmes moyens capteurs, si ladite au moins une deuxième surface de support (5, 4') est dans ladite position opérationnelle.

6. Le procédé selon la revendication 5, **caractérisé en ce que** ladite étape consistant à charger au moins une pièce (P) sur ladite au moins une deuxième surface de support (5, 4') est effectuée s'il a été préalablement détecté que ladite au moins une deuxième surface de support (5, 4') est dans ladite position opérationnelle.

7. Un système comprenant :
un chariot (1, 1') de chargement et de déchargement de pièces (P) comprenant :
- un châssis (2, 2') qui est muni d'une pluralité de roues (3, 3') pour se déplacer, lors de l'utilisation, sur un sol (F, F') ;
- au moins une première surface de support (5, 4') qui est reliée audit châssis (2, 2') ; et
- au moins une deuxième surface de support (5, 4') qui est placée au-dessus de ladite au moins une première surface de support (5, 4') et reliée audit châssis (2, 2') de façon mobile entre une position opérationnelle, dans laquelle ladite au moins une deuxième surface de support (5, 4') est placée essentiellement horizontale de manière à permettre la mise en place d'au moins une pièce (P) sur ladite au moins une deuxième surface de support (5, 4'), et une position de repos, dans laquelle ladite au moins une deuxième surface de support (5, 4') est placée de manière à laisser libre la partie supérieure de ladite au moins une première surface de support (5, 4') pour permettre la mise en place d'au moins une pièce (P) sur ladite au moins une première surface de support (5, 4') ;
un dispositif de chargement automatique pour effectuer au moins une des étapes consistant à :
- positionner ladite au moins une deuxième surface de support (5, 4') dans ladite position de repos ;
- charger au moins une pièce (P) sur ladite au moins une première surface de support (5, 4') ;
- déplacer ladite au moins une deuxième surface de support (5, 4') de ladite position de repos à ladite position opérationnelle ;
- charger au moins une pièce (P) sur ladite au moins une deuxième surface de support (5, 4') positionnée dans ladite position opérationnelle.

8. Le système selon la revendication 7, **caractérisé en ce que** ladite au moins une première surface de support (5, 4') et ladite au moins une deuxième surface de support (5, 4') comprennent, chacune, une pluralité de dents (7) qui sont essentiellement parallèles entre elles.

9. Le système selon la revendication 8, **caractérisé en ce que** ladite pluralité de dents (7) a une densité de dents qui augmente progressivement d'un premier côté de ladite pluralité de dents (7) à un deuxième côté de ladite pluralité de dents (7) qui est opposé audit premier côté.

10. Le système selon l'une quelconque des revendications de 7 à 9, **caractérisé en ce que** ladite au moins une deuxième surface de support (5) est reliée de façon pivotante audit châssis (2) autour d'un premier axe de rotation.

11. Le système selon la revendication 10, **caractérisé en ce que** ledit premier axe de rotation est essentiellement horizontal.

12. Le système selon la revendication 10 ou 11, **caractérisé en ce que** ladite au moins une deuxième surface de support (5) dans ladite position de repos est placée essentiellement verticale.

13. Le système selon l'une quelconque des revendications de 10 à 12, **caractérisé en ce que** le chariot (1) comprend au moins une troisième surface de support (5) qui est placée au-dessus de ladite au moins une deuxième surface de support (5) et reliée de façon pivotante audit châssis (2) autour d'un deuxième axe de rotation, qui est parallèle à et horizontalement décalé par rapport audit premier axe de rotation, entre une position opérationnelle, dans laquelle ladite au moins une troisième surface de support (5) est placée essentiellement horizontale de manière à permettre la mise en place d'au moins une pièce (P) sur ladite au moins une troisième surface de support (5), et une position de repos, dans laquelle ladite au moins une troisième surface de support (5) est placée de manière à laisser libre la partie supérieure de ladite au moins une deuxième surface de support (5, 4') qui est placée dans la position opérationnelle respective, pour permettre la mise en place d'au moins une pièce (P) sur ladite au moins une deuxième surface de support (5).

14. Le système selon l'une quelconque des revendications de 7 à 9, **caractérisé en ce que** ladite au moins une deuxième surface de support (5) est reliée audit châssis (2) de manière à pouvoir se déplacer par translation.

15. Le système selon la revendication 14, **caractérisé en ce que** ladite au moins une deuxième surface de support (5) est reliée audit châssis (2) de manière à pouvoir se déplacer par translation le long d'un axe de translation (M') qui est essentiellement horizontal.

16. Le système selon la revendication 15, **caractérisé en ce qu'**au moins un premier côté et au moins un deuxième côté qui est plus long que ledit au moins un premier côté sont définis dans ladite au moins une deuxième surface de support (5), et **en ce que** ledit axe de translation (M') est essentiellement parallèle audit au moins un premier côté.

17. Le système selon l'une quelconque des revendications de 14 à 16, **caractérisé en ce que** le chariot (1') comprend au moins une troisième surface de support (4') qui est placée au-dessus de ladite au moins une deuxième surface de support (4') et reliée audit châssis (2') de manière à pouvoir se déplacer par translation entre une position opérationnelle, dans laquelle ladite au moins une troisième surface de support (4') est placée essentiellement horizontale de manière à permettre la mise en place d'au moins une pièce (P) sur ladite au moins une troisième surface de support (4'), et une position de repos, dans laquelle ladite au moins une troisième surface de support (4') est placée de manière à laisser libre la partie supérieure de ladite au moins une deuxième surface de support (4') qui est placée dans la position opérationnelle respective, pour permettre la mise en place d'au moins une pièce (P) sur ladite au moins une deuxième surface de support (4').

18. Le système selon l'une quelconque des revendications de 7 à 17, **caractérisé en ce qu'**au moins une roue de ladite pluralité de roues (3, 3') est associée à un système d'arrêt pour permettre l'arrêt dudit chariot (1, 1').

19. Le système selon l'une quelconque des revendications de 7 à 18, **caractérisé en ce que** le chariot (1, 1') comprend des premiers moyens capteurs configurés pour détecter s'il y a au moins une pièce (P) sur ladite au moins une deuxième surface de support (5, 4').

20. Le système selon l'une quelconque des revendications de 7 à 19, **caractérisé en ce que** le chariot (1, 1') comprend des deuxièmes moyens capteurs configurés pour détecter si ladite au moins une deuxième surface de support (5, 4') est dans ladite position opérationnelle.
